# EUROPÄISCHE PATENTANMELDUNG

(11) **EP 1 630 088 A2**
(43) Veröffentlichungstag der Anmeldung: **01.03.2006**
(21) Anmeldenummer: 05107809.5
(22) Anmeldetag: 25.08.2005
(51) Int. Cl.: B62L 1/12

(54) **Felgenbremse**

(30) Priorität: 30.08.2004 DE 202004013602 U
(71) Anmelder: Canyon Bicycles GmbH, 56073 Koblenz (DE)
(72) Erfinder: Smolik, Hans-Christian, 84163, Marklkofen (DE)
(74) Vertreter: von Kirschbaum, Alexander

(57) **Zusammenfassung**

Eine Felgenbremse für Fahrräder, insbesondere für Rennräder, weist zwei Bremsenarme (10, 12) auf. An ersten Enden (16, 18) der beiden Bremsenarme (10, 12) ist jeweils eine Bremsbacke (20) vorgesehen An den zweiten Enden (22, 24) der Bremsenarme (10, 12) ist ein Bremszug (26) befestig. Die beiden Bremsenarme (10, 12) sind vorzugsweise über eine gemeinsame zentrale Schwenkachse (14) miteinander verbunden und um diese schwenkbar. Um bei guter Steifigkeit der Bremsenarme (10, 12) ein möglichst geringes Gewicht erzielen zu können, sind die Bremsenarme erfindungsgemäß als Hohlkörper ausgebildet. Um bei geringem Gewicht ferner eine möglichst gleichmäßige Kraftübertragung von den Bremsbacken (20) auf die Felge (42) zu ermöglichen, sind die Bremsenarme in montiertem Zustand X-förmig ausgebildet, so dass der Bremszug (26) im Wesentlichen horizontal verläuft.

## Beschreibung

Die Erfindung betrifft eine Felgenbremse für Fahrräder, insbesondere für Rennräder.

Felgenbremsen für Fahrräder weisen beispielsweise zwei Bremsenarme auf, wobei an den ersten Enden der beiden Bremsenarme jeweils eine Bremsbacke und an den zweiten Enden der Bremsenarme jeweils ein Bremszug befestigt ist. Die beiden Bremsenarme sind über eine gemeinsame Schwenkachse schwenkbar gehalten, wobei die Schwenkachse mit dem Gabelrohr verbunden ist. Bei derartigen bekannten Felgenbremsen sind die beiden Bremsenarme derart ausgebildet, dass der Bremszug im Wesentlichen vertikal verläuft und die beiden zweiten Enden der Bremsenarme somit übereinander angeordnet sind. Vereinfacht ausgedrückt ist bei derartigen Bremsen ein Bremsenarm C-förmig und weist das in Draufsicht untere Befestigenselement des Bremszugs auf. Der zweite Bremsenarm ist zweifach gebogen, wobei eine erste Biegung von dem ersten Ende, das die Bremsbacke trägt, zur zentralen Schwenkachse hin verläuft und die zweite Biegung sodann einen entgegengesetzten Bogen aufweist, so dass das zweite Ende dieses Bremsenarms oberhalb des zweiten Endes des C-förmigen Bremsenarms angeordnet ist. Auf Grund der unterschiedlichen Gestaltung der Bremsenarme ist die Kraftübertragung auf die beiden Bremsbacken unterschiedlich, so dass die beiden Bremsbacken eine unterschiedliche Bremskraft auf die Felge ausüben.

Unabhängig von der Ausgestaltung der Bremsen besteht insbesondere bei Rennrad-Bremsen die Forderung, dass die Bremsen bei hoher Steifigkeit ein möglichst geringes Gewicht aufweisen.

Aufgabe der Erfindung ist es, eine Felgenbremse für Fahrräder, insbesondere für Rennräder, zu schaffen, mit der bei gegenüber Hochleistungs-Rennradbremsen zumindest gleicher Steifigkeit eine Gewichtsersparnis möglich ist. Eine weitere, hiervon unabhängige Aufgabe besteht darin, eine möglichst gleichmäßige Kraftverteilung auf die beiden Bremsbacken zu erzielen

Die Lösung der Aufgabe erfolgt erfindungsgemäß durch die Merkmale des Anspruchs 1.

Bei der erfindungsgemäßen Felgenbremse sind die beiden Bremsenarme als Hohlkörper ausgebildet. Untersuchungen haben gezeigt, dass mit Hohlkörpern hohe Steifigkeiten bei geringem Gewicht erzielt werden können. So ist es bei der erfindungsgemäßen Felgenbremse möglich, bei einer sehr hohen Steifigkeit der einzelnen Bremsenarme ein geringes Gewicht zu realisieren. Beispielsweise wiegt ein Rohr aus Titan mit 11 mm Durchmesser und einer Wandstärke von 0,75 mm etwa die Hälft eines Vollstabes aus Aluminium mit 10 mm Durchmesser. Hierbei ist die Biegesteifigkeit des Titanrohrs sogar etwas höher als diejenige des Aluminium-Vollstabes.

Ein besonders bevorzugtes Herstellungsverfahren zur Herstellung der Bremsenarme besteht erfindungsgemäß darin, die Bremsenarme aus rohrförmigen Hohlkörpern durch Umformung herzustellen. Besonders bevorzugt ist hierbei die Umformung der Hohlkörper durch Hydroforming bzw. Innenhochdruck-Umformen. Hierbei wird ein zu verformender, hohler Gegenstand in eine Form eingelegt, deren Innenkontur der gewünschten Form entspricht. Der rohrförmiger Körper wird sodann von innen insbesondere über ein flüssiges Medium mit Druck beaufschlag und hierdurch verformt. Unterschiedliche Verfahrensvarianten für das Innenhochdruck-Umformen sind beispielsweise in VDI 3146 Blatt 1 beschrieben.

Vorzugsweise wird zur Herstellung der Bremsenarme ein Hohlkörper mit einer Wandstärke von 0,7 - 1 mm verwendet. Als Material ist insbesondere Metal und hierbei bevorzugt Edelstahl oder Titan einsetzbar. Insbesondere Titan hat hierbei den Vorteil, dass es bei gleicher Steifigkeit leichter ist.

Ferner ist es möglich, die Bremsenarme aus faserverstärktem Kunststoff herzustellen oder faserverstärkten Kunststoff mit Metallteilen zu kombinieren.

Da die Bremsenarme erfindungsgemäß als Hohlkörper ausgebildet sind, ist es möglich, in eine am ersten Ende der Bremsenarme vorgesehen Öffnung, die im montierten Zustand nach unten weist, Bremsklotz-Versteifungen einzusetzen. Hierdurch ist eine gute Kraftübertragung von den Bremsenarmen auf die Bremsklötze gewährleistet.

Besonders bevorzugt ist es, die Bremse derart auszugestalten, dass die beiden Bremsenarme S-förmig sind. Insbesondere ist es hierbei möglich, die Bremsenarme identisch auszugestalten. Dies verringert die Herstellkosten erheblich, da zum Hydroforming nur eine Form für beide Bremsenarme erforderlich ist.

Eine besonders bevorzugte Ausführungsform der erfindungsgemäßen Felgenbremse mit als Hohlkörpern ausgebildeten Bremsenarmen ist nachstehend, insbesondere auch an Hand der Zeichnungen näher erläutert:

Bei einer besonders bevorzugten Ausführungsform weist die Felgenbremse zwei Bremsenarme auf, die über eine gemeinsame Schwenkachse insbesondere mit einem Rahmenhinterbau oder einem Gabelkopf eines Fahrradrahmens verbindbar sind. Erfindungsgemäß sind die beiden Bremsenarme derart ausgestaltet, dass der Bremszug zwischen den beiden zweiten Enden der Bremsenarme im Wesentlichen horizontal verläuft. Hierdurch ist es insbesondere möglich, die Form der beiden Bremsenarme ähnlich auszugestalten. Dies hat zur Folge, dass die Kräfte, die von den beiden Bremsbacken auf die Felge übertragen werden, annähernd identisch sind.

Ferner ist es auf Grund der erfindungsgemäßen Ausgestaltung der beiden Bremsenarme möglich, diese derart auszugestalten, dass die Bremsenarme im Bereich der zweiten Enden im Wesentlichen in Richtung einer Längsachse der Felgenbremse verlaufen. Bei einer beispielsweise montierten Vorderradbremse verläuft die Längsachse vertikal. Hierbei weisen die beiden Bremsenarme im Bereich der zweiten Enden zur Längsachse vorzugsweise einen Winkel von weniger als 30°, insbesondere weniger als 20 ° auf. Besonders bevorzugt ist es, wenn die beiden Bremsenarme im Bereich der zweiten Enden im Wesentlichen zueinander parallel verlaufen. Bei einer beispielsweise montierten Vorderradbremse verlaufen die beiden Bremsenarme im Wesentlichen nach oben. Der Bremszug verläuft sodann horizontal und senkrecht zur Längsachse zwischen den beiden zweiten Enden der Bremsenarme.

Bei einer besonders bevorzugten Ausführungsform sind die beiden Bremsenarme im montierten Zustand zu der Längsachse der Felgenbremse symmetrisch. Dies ist insbesondere in Draufsicht der Fall, wobei die beiden Bremsenarme in Seitenansicht zusätzlich abgewinkelt bzw. gebogen sein können, um sicherzustellen, dass die beiden Bremsbacken und auch die beiden zweiten Enden der Bremsenarme, an denen der Bremszug befestigt ist, einander gegenüberliegend angeordnet sind Hierbei ist die erfindungsgemäße Felgenbremse vorzugsweise derart ausgebildet, dass die beiden Bremsenarme in Draufsicht X-förmig angeordnet sind. Durch diese zangenartige Ausgestaltung der Felgenbremse kann eine gute Vergleichmäßigung der von den beiden Bremsbacken auf die Felgen übertragenen Kräfte erzielt werden. Ferner ist der Kraftfluss in den beiden Bremsenarmen optimiert. Des weiteren hat die erfindungsgemäße Ausgestaltung der Felgenbremse den Vorteil, dass die Felgenbremse bei ausreichend hoher Steifigkeit sehr leicht ausgebildet werden kann. Hierzu weisen die Arme der Felgenbremse Magnesium auf, bzw. bestehen in besonders bevorzugter Ausführungsform aus Magnesium. Insbesondere handelt es sich um eine Magnesiumknetlegierung, beispielsweise MgAl18Zn oder um eine hochwerte Magnesiumgusslegierung, insbesondere G-MgAl19Zn1. Hierdurch ist es möglich, dass die gesamte Felgenbremse ein Gewicht von weniger als 50 g, insbesondere weniger als 45 g hat.

Vorzugsweise weisen die beiden zweiten Enden der Bremsenarme in montiertem aber geöffnetem Zustand der Felgenbremse einen Abstand von weniger als 25mm, insbesondere weniger als 20 mm auf.

Vorzugsweise sind die Bremszugbefestigungselemente an den beiden zweiten Enden der Bremsenarme angeordnet. Die beiden Bremszugbefestigungselemente weisen in bevorzugter Ausführungsform im Wesentlichen den selben Abstand zu der Schwenkachse auf. Vorzugsweise unterscheidet sich der Abstand hierbei um weniger als 10 mm, besonders bevorzugt weniger als 5 mm.

Ferner ist es bevorzugt, dass die beiden Bremsenarme in Längsrichtung im Wesentlichen die selbe Länge aufweisen. Durch die vorstehend aufgeführten bevorzugten Weiterbildungen der Erfindung kann eine weitere Vergleichmäßigung der von den Bremsbacken auf die Felgen aufgebrachten Kräfte erzielt werden.

Die beiden Bremszugbefestigungselemente, die an den beiden zweiten Enden der Bremsenarme vorgesehen sind, fluchten vorzugsweise miteinander. Die beiden Bremszugbefestigungselemente sind in montiertem Zustand somit senkrecht zur Fahrtrichtung sowie senkrecht zur Längsachse der Felgenbremse hintereinander angeordnet. Der Verlauf des Bremszuges zwischen den beiden zweiten Enden der Bremsenarme ist somit vorzugsweise parallel zu den aufeinanderzugerichteten, von den Bremsbacken auf die Felge übertragenden Bremskräften.

Um ein Fluchten der beiden Bremszug-Befestigungselemente zu ermöglichen, ist vorzugsweise einer der beiden Bremsenarme im Bereich des zweiten Endes gebogen. Die Richtung der Biegung ist hierbei in oder entgegengesetzt zur Fahrtrichtung bei einer montierten Vorderradbremse. Ebenso ist es möglich, dass die beiden zweiten Enden der Bremsenarme leicht in entgegengesetze Richtung zueinander gebogen sind, um ein Fluchten der beiden Bremszug-Befestigungselemente zu ermöglichen. Ebenso kann einer oder beide Bremsenarme im Bereich der zweiten Enden einen Ansatz aufweisen, der bei einer montierten Vorderradbremse ebenfalls in Fahrtrichtung oder entgegengesetzt zur Fahrtrichtung angeordnet ist. An einer Anlagefläche dieses Ansatzes kann der Bremszug zum Klemmen mit Hilfe einer Schraube oder dgl. anliegen.

Um den Kraftfluss ausgehend von den zweiten Enden, an denen die Bremszug-Befestigungselemente angeordnet sind, zu den ersten Enden, an denen die Bremsbacken befestigt sind, zu optimieren, sind die beiden Bremsenarme im Aufnahmebereich der Schwenkachse, d. h. in dem Bereich, in dem die höchsten Kräfte und Momente auftreten, verstärkt ausgebildet. Die beiden freien Enden jedes Bremsenarmes sind möglichst schlank ausgestaltet, um das Gewicht der Bremse möglichst gering zu halten.

Nachfolgend wird die Erfindung an Hand bevorzugter Ausführungsformen unter Bezugnahme auf die anliegenden Zeichnungen näher erläutert.

Es zeigen:
- Fig. 1: eine schematische Draufsicht einer ersten bevorzugten Ausführungsform der Felgenbremse,
- Fig. 2: eine schematische Draufsicht einer zweiten bevorzugten Ausführungsform der Felgenbremse,
- Fig. 3: eine schematische Teil-Seitenansicht eines Bremsenarms und
- Fig. 4: eine schematische Teil-Seitenansicht des anderen Bremsenarms, wobei in den Figuren 3 und 4 die sich einander gegenüberliegenden Bereiche gezeigt sind.

Die erfindungsgemäße Felgenbremse weist zwei hohle Bremsenarme 10, 12 auf. Die beiden Bremsenarme 10, 12 sind über eine gemeinsame Schwenkachse 14 gelagert, wobei die Schwenkachse 14 vorzugsweise am Gabelrohr befestigt ist. An den ersten Enden 16, 18 der beiden Bremsenarme 10, 12 sind Bremsbacken 20 befestigt

Die zweiten Enden 22, 24 der beiden Bremsenarme 10 bzw. 12 sind einander gegenüberliegend angeordnet und dienen zur Befestigung des Bremszugs, der im dargestellten Ausführungsbeispiel als Bowden-Zug ausgebildet ist und beispielsweise ein inneres Stahlseil 28 aufweist, das von einer Führungshülle 30 umgeben ist. Die Führungshülle 30 ist über ein mit einem Außengewinde versehenes Hülsenelement 32 in einem ersten Bremszug-Befestigungselement 34 gehalten und hierüber mit dem Bremsenarm 12 verbunden. Das erste Bremszug-Befestigungselement 34 ist im dargestellten Ausführungsbeispiel als ein Sackloch mit Innengewinde ausgebildet, in das die Hülse 32 eingeschraubt werden kann.

Bei dem gegenuberliegenden Bremszug-Befestigungselement 36 handelt es sich im dargestellten Ausführungsbeispiel um eine Schraube, die in ein Gewinde 38, das stirnseitig im zweiten Ende 22 des Bremsenarms 10 angeordnet ist, einschraubbar ist. Zwischen der Schraube 36 und dem zweiten Ende 22 des Bremsenarms 10 erfolgt ein Einklemmen des Stahlseils 28.

Durch Betätigen der Bremse erfolgt ein Schwenken der beiden Bremsenarme 10, 12 um die zentrale Schwenkachse 14 in Richtung der beiden Pfeile 40, so dass die Bremsbacken 20 an einer Felge 42 zur Anlage kommen.

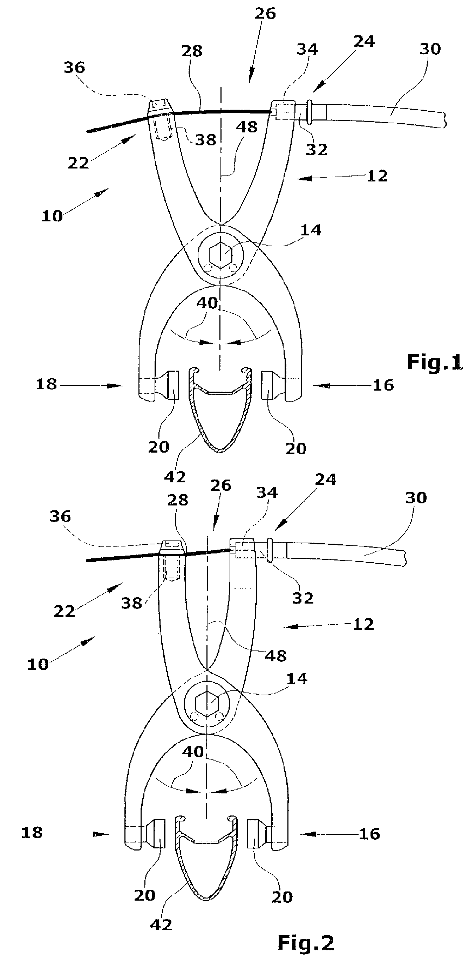

Der Bremszug 26 verläuft, wie aus Fig. 1 ersichtlich ist, im Wesentlichen senkrecht zu den beiden Enden 22, 24 der beiden Bremsenarme 10, 12.

Eine weitere Ausfuhrungsform der in Draufsicht X-förmig ausgebildeten bzw. angeordneten beiden Bremsenarme 10, 12 ist in Fig. 2 dargestellt, wobei identische bzw. ähnliche Bestandteile mit den selben Bezugszeichen gekennzeichnet sind.

Der wesentliche Unterschied der in Fig. 2 dargestellten Felgenbremse besteht darin, dass die oberen Teile der beiden Bremsenarme, d. h. die in der Zeichnung oberhalb der Schwenkachse 14 angeordneten Teile der Bremsenarme 10, 12, einen geringen Abstand zueinander aufweisen, wobei die Bremsbacken 20 weiterhin den gleichen Abstand zueinander aufweisen. Der Abstand zwischen den beiden Enden 22, 24 der Bremsenarme 10, 12 ist somit geringer. Auf Grund der sich hierdurch ändernden Hebelarme ist ein effektiveres Bremsen bzw. eine verbesserte Kraftübertragung auf die Bremsbacken 20 und von diesen auf die Felge 42 möglich. Die beiden Bremsenarme 10, 12 verlaufen, wie sich aus der Fig. 2 ergibt, in Draufsicht im Bereich der zweiten Enden 22, 24 im Wesentlichen parallel zueinander.

Beide Ausführungsformen (Fig. 1 und Fig. 2) der erfindungsgemäßen Felgenbremse sind somit im Wesentlichen symmetrisch zu einer Längsachse 48.

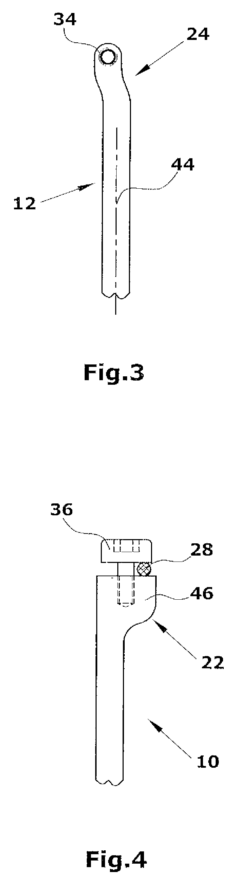

In den beiden Ausführungsformen können die Bremsenarme 10, 12 im Bereich der zweiten Enden, wie an Hand der Figuren 3 und 4 dargestellt, ausgebildet sein. Hierbei kann jeweils nur eine der beiden Ausgestaltungen vorgesehen sein oder die beiden Ausgestaltungen miteinander kombiniert sein.

Um ein Fluchten der beiden Bremszug -Befestigungselemente 34, 36 zu ermöglichen, kann der Bremsenarm 12 im Bereich des zweiten Endes 24 gebogen sein, so dass das Bremszug-Befestigungselement 43 gegenüber einer Mittelachse 44 versetzt ist. Die Krümmung bzw. Biegung des Bremsenarms in diesem Bereich erfolgt in Richtung des zweiten Bremsenarms 12. Handelt es sich bei dem Bremsenarm 12 wie in den dargestellten Ausführungsbeispielen um den hinteren Bremsenarm, so ist das zweite Ende 24 nach vorne gebogen.

Je nach dem, wie stark die Krümmung des zweiten Endes 24 und somit das seitliche Versetzen des Bremszug-Befestigungselementes 34 erfolgt, kann zusätzlich an dem anderen Bremsenarm 10 im Bereich dessen zweiten Endes 22 ein Ansatz 46 vorgesehen sein. Der Ansatz 46 und die Krümmung des Bremsenarms 12 im Bereich des zweiten Endes 24 sind derart aufeinander abgestimmt, dass das Stahlseil 28 senkrecht zur Fahrtrichtung bei montierter Felgenbremse verläuft.

Die erfindungsgemäß zangenartig ausgebildete Felgenbremse weist ferner eine Rückstellfeder auf. Diese kann derart ausgebildet sein, dass sie die Schwenkachse 14 umgibt Ebenso ist es möglich, wie bei einer Zange zwischen den beiden in den Zeichnungen oberhalb der Schwenkachse 14 angeordneten Teilen der Bremsenarme 10, 12 eine Feder vorzusehen, durch die diese beiden Teile der Bremsenarme 10, 12 auseinander gedrückt werden.

## Patentansprüche

1. Felgenbremse für Fahrräder, insbesondere Rennräder, mit zwei Bremsenarmen (10, 12), an deren ersten Enden (16, 18) jeweils eine Bremsbacke (20) und an deren zweiten Enden ein Bremszug (26) befestigbar ist,
**dadurch gekennzeichnet, dass**
die Bremsenarme (10, 12) als Hohlkörper ausgebildet sind.

2. Felgenbremse nach Anspruch 1, **dadurch gekennzeichnet, dass** die Bremsenarme (10, 12) durch Umformen eines rohrförmigen Körpers, insbesondere durch Hydroforming hergestellt sind.

3. Felgenbremse nach Anspruch 1 oder 2, **dadurch gekennzeichnet, dass** die Wandstärke des Hohlkörpers 0,7 - 1 mm beträgt.

4. Felgenbremse nach einem der Ansprüche 1 - 3, **dadurch gekennzeichnet, dass** die Bremsenarme (10, 12) im Wesentlichen S-förmig sind.

5. Felgenbremse nach einem der Ansprüche 1 - 4, **dadurch gekennzeichnet, dass** die Bremsenarme (10, 12) jeweils eine zentrale Lagerbohrung zur Aufnahme einer Schwenkachse (14) aufweisen.

6. Felgenbremse nach Anspruch 5, **dadurch gekennzeichnet, dass** die Bremsenarme (10, 12) im Aufnahmebereich der Schwenkachse (14) verstärkt sind, insbesondere eine eingelötete und/ oder eine eingeklebte Lagerbuchse aufweisen.

7. Felgenbremse nach einem der Ansprüche 1 ― 6, **dadurch gekennzeichnet, dass** die Bremsenarme (10, 12) aus Metall, insbesondere Edelstahl oder Titan, hergestellt sind und/ oder faserverstärkten Kunststoff aufweisen.

8. Felgenbremse nach einem der Ansprüche 1 ― 7, **dadurch gekennzeichnet, dass** die Bremsenarme am ersten Ende (16, 18) eine Bremsklotzversteifung aufweisen, die insbesondere in eine in Längsrichtung der Bremsenarme (10, 12) verlaufende Öffnung eingesteckt sind.

9. Felgenbremse nach einem der Ansprüche 1 ― 8, **gekennzeichnet durch** eine mit einem Rahmenhinterbau oder einem Gabelkopf verbindbaren Schwenkachse (14), an der die Bremsenarme (10, 12) schwenkbar gehalten sind, wobei
der Bremszug (26) zwischen den zweiten Enden (22, 24) der Bremsenarme (10, 12) im Wesentlichen horizontal verläuft.

10. Felgenbremse nach einem der Ansprüche 1 - 9, **dadurch gekennzeichnet, dass** der Bremszug (26) im Wesentlichen senkrecht zu den zweiten Enden (20, 24) der beiden Bremsenarme (10, 12) verläuft.

11. Felgenbremse nach einem der Ansprüche 1 - 10, **dadurch gekennzeichnet, dass** die Bremsenarme (10, 12) als Schmiedeteile hergestellt sind.

12. Felgenbremse nach einem der Ansprüche 1 - 11, **dadurch gekennzeichnet, dass** die Bremsenarme (10, 12) Magnesium aufweisen, insbesondere im Wesentlichen aus Magnesium bestehen.

13. Felgenbremse nach einem der Ansprüche 1 - 12, **dadurch gekennzeichnet, dass** die an den zweiten Enden (22, 24) vorgesehenen Bremszug-Befestigungsefemente (34, 36) miteinander fluchten.

14. Felgenbremse nach einem der Ansprüche 1 - 13, **dadurch gekennzeichnet, dass** der Bremszug (26) zwischen den beiden zweiten Enden (22, 24) im Wesentlichen parallel zu den aufeinander zugerichteten Bremskräften verläuft.
